(19)

**Europäisches Patentamt**
**European Patent Office**
**Office européen des brevets**

(11) **EP 4 694 168 A2**

(12) **EUROPEAN PATENT APPLICATION**

(43) Date of publication:
**11.02.2026 Bulletin 2026/07**

(21) Application number: **25200455.1**

(22) Date of filing: **05.09.2025**

(51) International Patent Classification (IPC):
**H04N 23/698** (2023.01)   **H04N 23/73** (2023.01)
**H04N 23/90** (2023.01)

(52) Cooperative Patent Classification (CPC):
**H04N 23/90; H04N 23/698; H04N 23/73**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.12.2024   CN 202411845610**

(71) Applicant: **Beijing Baidu Netcom Science Technology Co., Ltd.**
**Beijing 100085 (CN)**

(72) Inventor: **CUI, Wen**
**BEIJING, 100085 (CN)**

(74) Representative: **Lorenz Seidler Gossel Part. mbB**
**Widenmayerstr. 23**
**80538 München (DE)**

(54) **CAMERA IMAGE DATA PROCESSING METHOD, APPARATUS, ELECTRONIC DEVICE, AND MEDIUM**

(57)   A method includes: obtaining initial camera parameters; determining, based on the initial camera parameters, a target condition; determining, based on the target condition, at least one first time offset, where each of the at least one first time offset indicates an exposure delay time between every two adjacent cameras of a plurality of cameras, and when setting the exposure delay time between every two adjacent cameras of the plurality of cameras based on each first time offset, the first traffic peak generated during the transmission of a plurality of images in parallel to a processor by the plurality of cameras is less than a first threshold; and setting, based on the at least one first time offset, the exposure delay time between every two adjacent cameras of the plurality of cameras.

300

FIG. 3

## Description

## TECHNICAL FIELD

The present disclosure relates to the technical field of image processing, particularly to the technical fields of image transmission, image stitching, and autonomous driving, and specifically to a camera image data processing method, an apparatus, an electronic device, a computer-readable storage medium, and a computer program product.

## BACKGROUND

A plurality of images with overlapping regions can be captured by synchronously triggering the exposure of a plurality of cameras, so as to transmit the plurality of captured images in parallel to a processor for image stitching to obtain a panoramic image.

The methods described in this section are not necessarily methods that have been previously conceived or employed. Unless otherwise indicated, it should not be assumed that any method described in this section is considered to be the prior art only due to its inclusion in this section. Similarly, the problems mentioned in this section should not be assumed to be recognized in any prior art unless otherwise indicated.

## SUMMARY

The present disclosure provides a camera image data processing method, an apparatus, an electronic device, a computer-readable storage medium, and a computer program product.

According to an aspect of the present disclosure, a camera image data processing method is provided, including: obtaining initial camera parameters, where the initial camera parameters are used for each of a plurality of cameras, where the plurality of cameras is used to capture a plurality of images and transmit the plurality of images in parallel to a processor for panoramic image stitching; determining, based on the initial camera parameters, a target condition, where the target condition indicates a range of exposure delay times that are allowed to be set between every two adjacent cameras of the plurality of cameras; determining, based on the target condition, at least one first time offset, where each of the at least one first time offset indicates an exposure delay time between every two adjacent cameras of the plurality of cameras, and when setting the exposure delay time between every two adjacent cameras of the plurality of cameras based on each first time offset, the first traffic peak generated during the transmission of the plurality of images in parallel to the processor by the plurality of cameras is less than a first threshold; and setting, based on the at least one first time offset, the exposure delay time between every two adjacent cameras of the plurality of cameras.

According to an aspect of the present disclosure, a camera image data processing apparatus is provided, comprising: an obtaining module configured to obtain initial camera parameters, where the initial camera parameters are used for each of a plurality of cameras, where the plurality of cameras is used to capture a plurality of images and transmit the plurality of images in parallel to a processor for panoramic image stitching; a first determination module configured to determine, based on the initial camera parameters, a target condition, where the target condition indicates a range of exposure delay times that are allowed to be set between every two adjacent cameras of the plurality of cameras; a second determination module configured to determine, based on the target condition, at least one first time offset, where each of the at least one first time offset indicates an exposure delay time between every two adjacent cameras of the plurality of cameras when the the plurality of cameras is triggered in order, and when setting the exposure delay time between every two adjacent cameras of the plurality of cameras based on each first time offset, the first traffic peak generated during the transmission of the plurality of images in parallel to the processor by the plurality of cameras is less than a first threshold; and a setting module configured to set, based on the at least one first time offset, the exposure delay time between every two adjacent cameras of the plurality of cameras.

According to another aspect of the present disclosure, a computer program product is provided, the computer program product comprising program code portions for performing the method described in the present disclosure when the computer program product is executed on one or more computing devices..

According to another aspect of the present disclosure, a computer-readable storage medium storing programs is provided, where the programs include instructions which, when executed by the processor of the computing device, causes the computing device to implement the method of the present disclosure..

According to one or more embodiments of the present disclosure, a camera image data processing method is provided, for a scenario where a plurality of cameras simultaneously transmit a plurality of images that are captured for panoramic stitching, a preferable time offset between every two cameras of the plurality of cameras is determined based on initial parameters of the cameras themselves and a range of exposure delay times capable of achieving the panoramic image stitching, so that when triggering the plurality of cameras, the exposure delay time between two adjacent cameras is set based on the preferable time offset, thereby enabling the reduction of the data transmission traffic peak during the transmission of the plurality of images captured by the plurality of cameras in parallel to a processor while ensuring the quality of the panoramic image stitched based on the images captured by the plurality of cameras, and effectively alleviating the pressure on the interface and the pressure on the data buffer of the processor when receiving the image data.

It should be understood that the content described in this section is not intended to identify key or important features of the embodiments of the present disclosure, nor is it intended to limit the scope of the present disclosure. Other features of the present disclosure will become readily understood from the following specification.

## BRIEF DESCRIPTION OF THE DRAWINGS

The drawings exemplarily illustrate embodiments and constitute a part of the specification, and are used in conjunction with the textual description of the specification to explain the example implementations of the embodiments. The illustrated embodiments are for illustrative purposes only and do not limit the scope of the claims. Throughout the drawings, like reference numerals refer to similar but not necessarily identical elements.

FIG. 1 illustrates a schematic diagram of an example system in which various methods described herein can be implemented according to example embodiments of the present disclosure;

Figure 2 is a schematic diagram illustrating an example panoramic image generation system in which the various methods described herein may be implemented according to example embodiments of the present disclosure;

Figure 3 illustrates a flowchart of a camera image data processing method according to an embodiment of the present disclosure;

Figure 4 illustrates a partial flowchart of another camera image data processing method according to an embodiment of the present disclosure;

Figure 5a is a schematic diagram of a pixel row exposure cycle of a camera image according to an embodiment of the present disclosure;

Figures 5b and 5c respectively illustrate schematic diagrams of the data transmission traffic during the transmission of a plurality of captured images in parallel to a processor by a plurality of cameras, when an exposure time delay is not set and when an exposure time delay is set.

Figure 6 illustrates a partial flowchart of another camera image data processing method according to an embodiment of the present disclosure;

Figure 7 illustrates a partial flowchart of another camera image data processing method according to an embodiment of the present disclosure;

Figure 8 illustrates a partial flowchart of another camera image data processing method according to an embodiment of the present disclosure;

Figure 9 illustrates a structural block diagram of a camera image data processing apparatus according to an embodiment of the present disclosure;

Figure 10 illustrates a structural block diagram of an example electronic device that may be used to implement embodiments of the present disclosure.

## DETAILED DESCRIPTION OF THE EMBODIMENTS

The example embodiments of the present disclosure are described below in conjunction with the accompanying drawings, including various details of the embodiments of the present disclosure to facilitate understanding, and they should be considered as example only. Therefore, one of ordinary skill in the art will recognize that various changes and modifications may be made to the embodiments described herein without departing from the scope of the present disclosure. Similarly, descriptions of well-known functions and structures are omitted in the following description for the purpose of clarity and conciseness.

In the present disclosure, unless otherwise specified, the terms "first", "second" and the like are used to describe various elements and are not intended to limit the positional relationship, timing relationship, or importance relationship of these elements, and such terms are only used to distinguish one element from another. In some examples, the first element and the second element may refer to the same instance of the element, while in some cases they may also refer to different instances based on the description of the context.

The terminology used in the description of the various examples in this disclosure is for the purpose of describing particular examples only and is not intended to be limiting. Unless the context clearly indicates otherwise, if the number of elements is not specifically defined, the element may be one or more. In addition, the terms "and/or" used in the present disclosure encompass any one of the listed items and all possible combinations thereof.

In related art, a method has been proposed to capture a plurality of images with overlapping regions by synchronously triggering the exposure of a plurality of cameras to transmit the plurality of captured images in parallel to a processor for image stitching to obtain a panoramic image. However, this method of transmitting a plurality of images in parallel leads to persistent peak bandwidth at the processor interface, thereby imposing stress on the processor and easily leading to latency and frame drops.

To address the above issues, the present disclosure provides a data processing method for camera images, for a scenario where a plurality of cameras simultaneously transmit a plurality of images that are captured for panoramic stitching. A preferable time offset between every two cameras of the plurality of cameras is determined based on initial parameters of the cameras themselves and a range of exposure delay times capable of achieving the panoramic image stitching, so that when triggering the plurality of cameras, the exposure delay time between two adjacent cameras is set based on the preferable time offset. Thereby enabling the reduction of the peak data transmission traffic volume during the transmission of the plurality of images captured by the plurality of cameras in parallel to a processor while ensuring the quality of the panoramic image stitched based on the images captured by the plurality of cameras, and effectively alleviating the interface pressure and data buffer pressure of the processor when receiving the image data.

Embodiments of the present disclosure will be described in detail below with reference to the accompanying drawings.

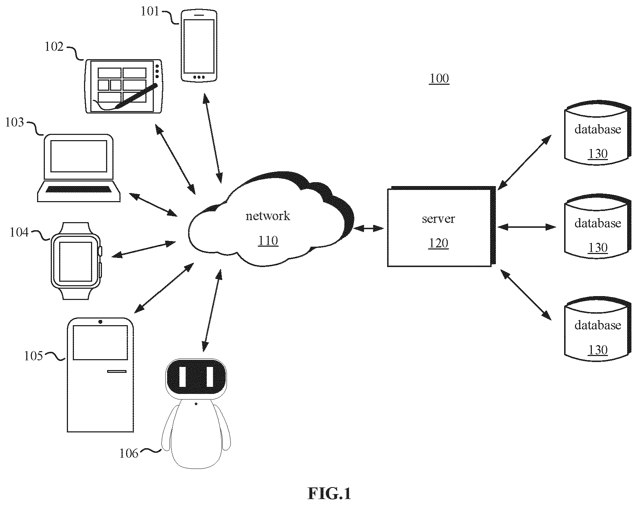

FIG. 1 illustrates a schematic diagram of an example system 100 in which various methods and apparatuses described herein may be implemented in accordance with embodiments of the present disclosure. Referring to FIG. 1, the system 100 includes one or more client devices 101, 102, 103, 104, 105 and 106, a server 120, and one or more communication networks 110 that couple one or more client devices to the server 120. The client devices 101, 102, 103, 104, 105, and 106 may be configured to execute one or more applications.

In embodiments of the present disclosure, the server 120 may run one or more services or software applications that enable the camera image data processing method.

In some embodiments, the server 120 may also provide other services or software applications, which may include non-virtual environments and virtual environments. In some embodiments, these services may be provided as web-based services or cloud services, such as to the user of the client devices 101, 102, 103, 104, 105, and/or 106 under a Software as a Service (SaaS) model.

In the configuration shown in FIG. 1, the server 120 may include one or more components that implement functions performed by the server 120. These components may include software components, hardware components, or a combination thereof that are executable by one or more processors. A user operating the client devices 101, 102, 103, 104, 105, and/or 106 may sequentially utilize one or more client applications to interact with the server 120 to utilize the services provided by these components. It should be understood that a variety of different system configurations are possible, which may be different from the system 100. Therefore, FIG. 1 is an example of a system for implementing the various methods described herein and is not intended to be limiting.

The user may use the client devices 101, 102, 103, 104, 105, and/or 106 to input a first target image, audio data, or a display video, etc. The client devices may provide an interface that enables the user of the client devices to interact with the client devices. The client devices may also output information to the user via the interface. Although FIG. 1 depicts only six client devices, those skilled in the art will be able to understand that the present disclosure may support any number of client devices.

The client devices 101, 102, 103, 104, 105, and/or 106 may include various types of computer devices, such as portable handheld devices, general-purpose computers, such as personal computers and laptop computers, workstation computers, wearable devices, smart screen devices, self-service terminal devices, service robots, gaming systems, thin clients, various messaging devices, sensors, or other sensing devices, and the like. These computer devices may run various types and versions of software applications and operating systems, such as Microsoft Windows, Apple iOS, Unix-like operating systems, Linux or Linux-like operating systems (e.g., Google Chrome OS); or include various mobile operating systems, such as Microsoft Windows Mobile OS, iOS, Windows Phone, Android. The portable handheld devices may include cellular telephones, smart phones, tablet computers, personal digital assistants (PDAs), and the like. The wearable devices may include head-mounted displays, such as smart glasses, and other devices. The gaming systems may include various handheld gaming devices, Internet-enabled gaming devices, and the like. The client devices can perform various different applications, such as various applications related to the Internet, communication applications (e.g., e-mail applications), Short Message Service (SMS) applications, and may use various communication protocols.

The network 110 may be any type of network well known to those skilled in the art, which may support data communication using any of a variety of available protocols (including but not limited to TCP/IP, SNA, IPX, etc.). By way of example only, one or more networks 110 may be a local area network (LAN), an Ethernet-based network, a token ring, a wide area network (WAN), an Internet, a virtual network, a virtual private network (VPN), an intranet, an external network, a blockchain network, a public switched telephone network (PSTN), an infrared network, a wireless network (for example, Bluetooth, WiFi), and/or any combination of these and/or other networks.

The server 120 may include one or more general-purpose computers, a dedicated server computer (e.g., a PC (personal computer) server, a UNIX server, a mid-end server), a blade server, a mainframe computer, a server cluster, or any other suitable arrangement and/or combination. The server 120 may include one or more virtual machines running a virtual operating system, or other computing architectures involving virtualization (e.g., one or more flexible pools of a logical storage device that may be virtualized to maintain virtual storage devices of a server). In various embodiments, the server 120 may run one or more services or software applications that provide the functions described below.

The computing unit in the server 120 may run one or more operating systems including any of the operating systems described above and any commercially available server operating system. The server 120 may also run any of a variety of additional server applications and/or intermediate layer applications, including a HTTP server, an FTP server, a CGI server, a Java server, a database server, etc.

In some implementations, the server 120 may include one or more applications to analyze and merge data feeds and/or event updates received from the user of the client devices 101, 102, 103, 104, 105, and 106. The server 130 may also include one or more applications to display the data feeds and/or the real-time events via one or more display devices of the client devices 101, 102, 103, 104, 105, and 106.

In some embodiments, the server 120 may be a server of a distributed system, or a server incorporating a blockchain. The server 120 may also be a cloud server, or an intelligent cloud computing server or an intelligent cloud host with an artificial intelligence technology. The cloud server is a host product in a cloud computing service system to overcome the defects of management difficulty and weak service expansibility exiting in a traditional physical host and virtual private server (VPS) service.

The system 100 may also include one or more databases 130. In certain embodiments, these databases may be used to store data and other information. For example, one or more of the databases 130 may be used to store information such as audio files and video files. The databases 130 may reside in various locations. For example, the database used by the server 120 may be local to the server 120, or may be remote from the server 120 and may communicate with the server 120 via a network-based or dedicated connection. The databases 130 may be of different types. In some embodiments, the database used by the server 120 may be, for example, a relational database. One or more of these databases may store, update, and retrieve data to and from the database in response to a command.

In some embodiments, one or more of the databases 130 may also be used by an application to store application data. The databases used by the application may be different types of databases, such as a key-value repository, an object repository, or a conventional repository supported by a file system.

The system 100 of FIG. 1 may be configured and operated in various ways to enable application of various methods and apparatuses described according to the present disclosure.

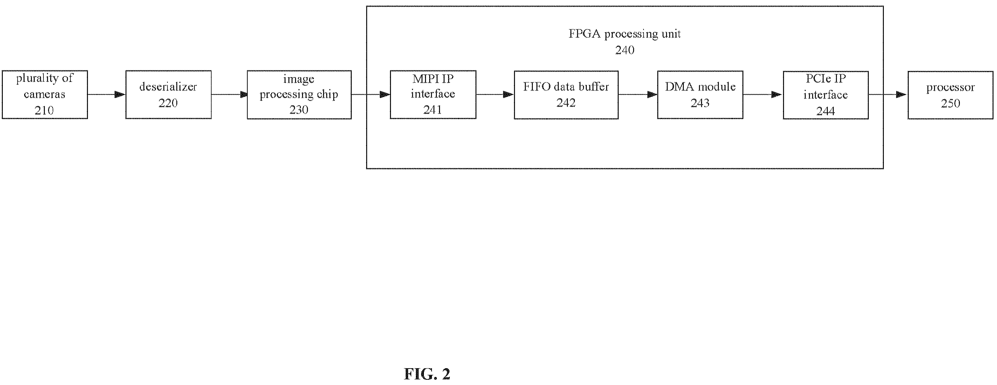

Figure 2 illustrates a schematic diagram of an example panoramic image generation system 200 in which the various methods described herein may be implemented according to example embodiments.

As shown in Figure 2, the system 200 includes a plurality of cameras 210, a deserializer 220, an image processing chip 230, an FPGA processing unit 240, and a processor 250, where the FPGA processing unit 240 further includes a MIPI IP interface 241, an FIFO data buffer 242, a DMA (Direct Memory Access) module 243, and a PCIe IP interface 244.

For example, the plurality of cameras 210 may be eight 8MP cameras, thereby enabling the simultaneous capture of eight 8MP images as images to be stitched, and by taking the FPGA processing unit 240 as an intermediary, the eight images captured by the eight cameras can be transmitted in parallel to the processor 250 for image stitching processing.

For example, the deserializer 220 may be a MAX96718 deserializer.

For example, the image processing chip 230 may be an ISP (Image Signal Processor) image processing chip.

For example, the DMA module 243 may further include a FIFO data interface.

It should be understood that the system 200 is a common panoramic image generation system in the art, and a person skilled in the art can know the specific data processing flow of each module therein, which will not be repeated here.

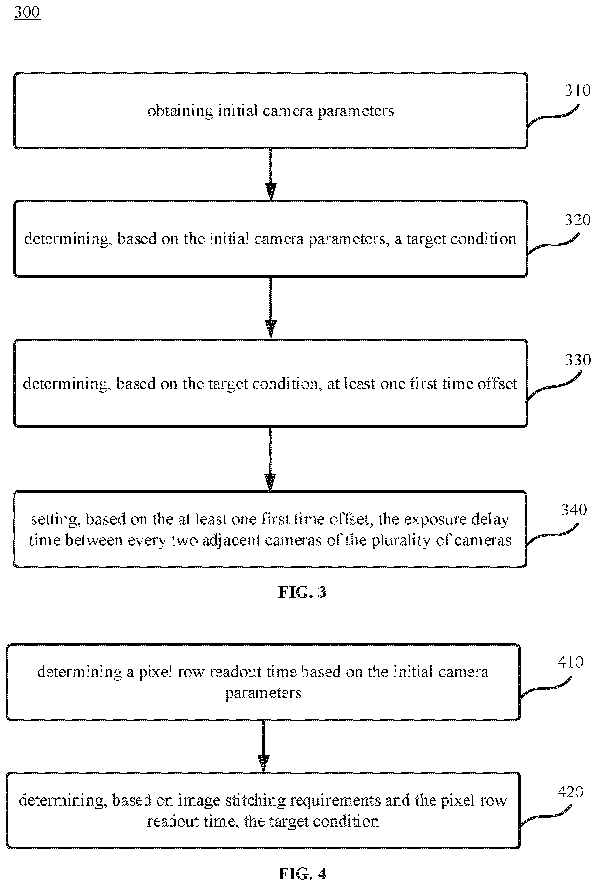

Figure 3 illustrates a flowchart of a camera image data processing method according to an embodiment of the present disclosure.

As shown in Figure 3, the camera image data processing method 300 includes:

    step 310: obtaining initial camera parameters, where the initial camera parameters are used for each of a plurality of cameras, where the plurality of cameras is used to capture a plurality of images and transmit the plurality of images in parallel to a processor for panoramic image stitching;
    step 320: determining, based on the initial camera parameters, a target condition, where the target condition indicates a range of exposure delay times that are allowed to be set between every two adjacent cameras of the plurality of cameras;
    step 330: determining, based on the target condition, at least one first time offset, where each of the at least one first time offset indicates an exposure delay time between every two adjacent cameras of the plurality of cameras, and when setting the exposure delay time between every two adjacent cameras of the plurality of cameras based on each first time offset, the first traffic peak generated during the transmission of the plurality of images in parallel to the processor by the plurality of cameras is less than a first threshold; and
    step 340: setting, based on the at least one first time offset, the exposure delay time between every two adjacent cameras of the plurality of cameras.

Thereby, for a scenario where the plurality of cameras simultaneously transmit the plurality of images that are captured for panoramic stitching, a preferable time offset between every two cameras of the plurality of cameras is determined based on the initial parameters of the cameras themselves and the range of exposure delay times capable of achieving the panoramic image stitching, so that when triggering the plurality of cameras, the exposure delay time between two adjacent cameras is set based on the preferable time offset, thereby enabling the reduction of the peak data transmission traffic volume during the transmission of the plurality of images captured by the plurality of cameras in parallel to the processor while ensuring the quality of the panoramic image stitched based on the images captured by the plurality of cameras, and effectively alleviating the interface pressure and data buffer pressure of the processor when receiving the image data.

Figure 4 illustrates a partial flowchart of another camera image data processing method according to an embodiment of the present disclosure.

According to some embodiments, as shown in Figure 4, the step 320 includes:

> step 410: determining a pixel row readout time based on the initial camera parameters, where the pixel row readout time indicates the time for reading out the data of the corresponding exposed pixel row; and
> step 420: determining, based on image stitching requirements and the pixel row readout time, the target condition, where the image stitching requirements indicate the range of exposure delay time that are allowed to be set such that the feature similarity between every two images to be stitched among the plurality of images is greater than the third threshold.

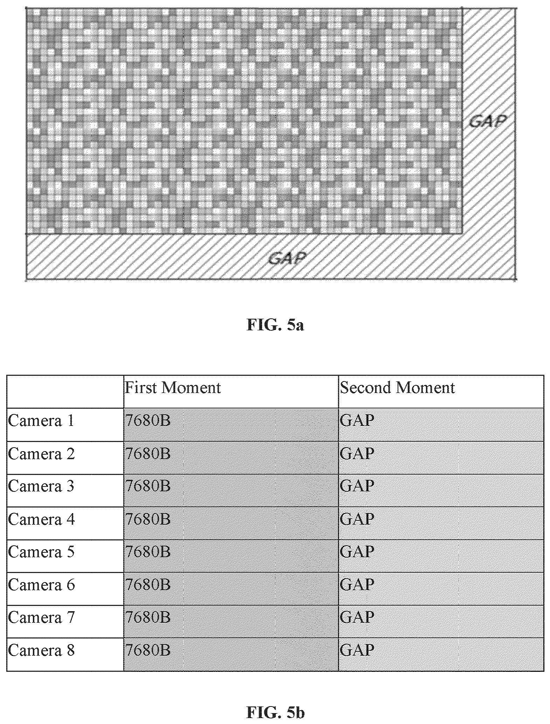

According to one or more embodiments, the camera image is exposed in units of pixel rows. Referring to Figure 5a, the gray region indicates a plurality of pixel rows. After performing exposure on each pixel row in the gray region, the data of the exposed pixel row needs to be read out and transmitted, and at this point the "GAP" regions shown in the hatched regions of the right and lower sides of the figure are generated.

In other words, the exposure cycle of each pixel row consists of the exposure time of the corresponding gray part thereof and the readout time of the hatched part thereof, and the pixel row readout time in step 410 corresponds to the readout time of the hatched region at the end of the corresponding pixel row.

In addition to the region at the end of the pixel rows on the right side, the readout time of the last pixel row of the current frame shown in Figure 5a further includes the hatched region at the bottom (the time interval between two parallel image transmissions). It should be noted that during the optimization process, since the readout time of the last pixel row is the longest, the readout time of a non-last pixel row is taken as the pixel row readout time (a constraint) in method 300, thereby meeting the constraint of the readout time of all pixel rows at the same time.

For example, the pixel line readout time in step 410 can be taken as an upper limit value of the optional range of the first time offset, such that the pixel row readout time is taken as one of the constraints during the optimization process for the first time offset in step 330.

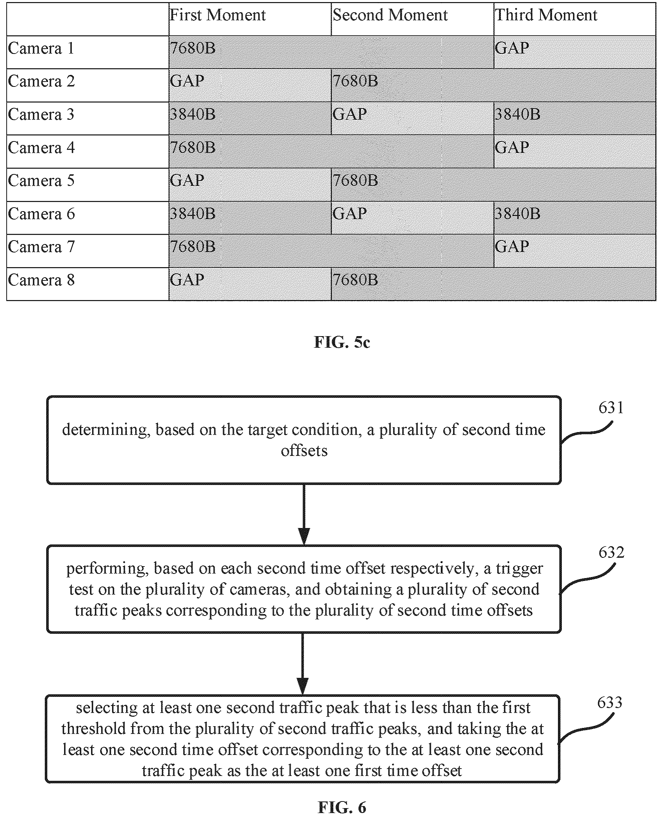

Figures 5b and 5c respectively illustrate schematic diagrams of the data traffic during the transmission of a plurality of captured images in parallel to a processor by a plurality of cameras, when an exposure time delay is not set and when the exposure time delay is set.

Referring to Figure 5b, which shows the data traffic of the image transmission when the exposure time delay is not set (the first time offset is equal to 0) and the plurality of cameras is eight 8MP cameras. As shown in Figure 5b, at the first moment of the transmission process, each of the eight cameras simultaneously transmits the data of one pixel row of the image it has captured to the processor, as a result, at this moment, the processor receives image data corresponding to eight pixel rows simultaneously and reaches the peak reception traffic moment; and at the second moment, all the eight cameras are at the pixel row readout time (GAP), and as a result, the data amount that the processor receives at this moment is zero.

Refer to Figure 5c, which shows the data traffic of the image transmission when the exposure time delay is set to 20 μs (the first time offset is 20 μs) and the plurality of cameras is eight 8MP cameras. Compared with Figure 5b, it can be seen that at each moment in Figure 5c, there is always at least one camera at the pixel row readout time. Therefore, after setting the exposure time delay, the data traffic received by the processor at any moment is less than the traffic peak at the first moment in Figure 5b, thereby achieving traffic peak shaving.

It should be noted that although each moment in Figure 5c corresponds to one complete GAP (pixel row readout time) in at least one camera, however, the current moment may also correspond to half a GAP, one-third of a GAP, or one-fifth of a GAP of that camera based on different exposure time delay settings.

Thus, under the same hardware conditions, by utilizing the pixel row readout time to perform interleaved transmission of data and GAP, the data traffic during the parallel transmission of multiple image data is effectively smoothed, the data reception pressure and buffer pressure of the processor interface is reduced, and the likelihood of latency and frame drops is reduced.

Furthermore, by taking the image stitching requirements of the panoramic image as constraints for optimization, the finally obtained first time offset is enabled to effectively balance the pressure of data transmission and the quality of image stitching to be applicable to scenarios, such as autonomous driving, which require simultaneous processing of large amounts of image data and have higher requirements for the quality of panoramic image stitching.

In step 310, the same initial camera parameters can be set for each of the plurality of cameras to improve the feature similarity between the images captured by each camera, thereby enabling the panoramic image obtained through stitching to have a relatively high degree of blending and coherence.

According to some embodiments, the initial camera parameters include at least the camera frame rate, the pixel clock, and the number of pixel columns and pixel rows in the captured image of each camera, and where the step 410 includes: determining the pixel row readout time based on the camera frame rate, the pixel clock, and the number of pixel columns and pixel rows.

As can be seen from Figure 5a, the pixel row readout time in step 410 is associated with the number of pixel rows and pixel columns in the current frame, the camera frame rate, and the pixel clock, and therefore, the pixel row readout time can be accurately computed based on the four parameters described above to be used as one of the constraints for optimizing the time offset.

Figure 6 illustrates a partial flowchart of another camera image data processing method according to an embodiment of the present disclosure.

According to some embodiments, as shown in Figure 6, step 330 includes:

> step 631: determining, based on the target condition, a plurality of second time offsets, where each of the plurality of second time offsets indicates the exposure delay time between every two adjacent cameras of the plurality of cameras;
> step 632: performing, based on each second time offset respectively, a trigger test on the plurality of cameras, and obtaining a plurality of second traffic peaks corresponding to the plurality of second time offsets, where each of the plurality of second traffic peaks indicates the traffic peak generated during the transmission of the plurality of images in parallel to the processor by the plurality of cameras based on the corresponding second time offset; and
> step 633: selecting at least one second traffic peak that is less than the first threshold from the plurality of second traffic peaks, and taking the at least one second time offset corresponding to the at least one second traffic peak as the at least one first time offset.

Based on this, the optional second time offsets can first be determined based on the image stitching requirements and the pixel row readout time, and then the second time offset with better effect on smoothing data traffic is selected therefrom based on the trigger test and taken as the first time offset, and the implementation approach is simple, efficient and highly accurate.

According to some embodiments, the image stitching requirements include at least one of the following: the maximum allowable transmission bandwidth of the interface of the processor; the maximum allowable data buffer capacity of the processor; and the maximum value of the exposure delay time that is allowed to be set such that the feature similarity between every two images to be stitched among the plurality of images is greater than the third threshold.

From the perspective of image stitching, each image of the plurality of images used for panoramic image stitching at least has overlap regions with another one, thereby enabling the determination of feature similarity between the two images based on the overlapping regions to achieve image stitching. Therefore, if the first time offset is too large, the overlapping regions between the captured images may be too small or even non-existent, making it is impossible to achieve effective stitching.

Additionally, from the perspective of data transmission, although the peak data transmission traffic volume can be reduced by setting the first time offset, if the reduced peak data transmission traffic volume is still greater than the maximum transmission bandwidth allowed by the processor interface and the maximum buffer data capacity allowed by the processor, the processor cannot fully receive the image data transmitted in parallel, leading to latency and frame drops, which affect the quality of the panoramic image obtained by stitching.

Therefore, by taking the above three items as the image stitching requirements, the potential impact of the first time offset on panoramic image stitching can be minimized, thereby ensuring the quality of the finally obtained panoramic image.

In one or more embodiments, to simplify the processing procedure, any one or any two of the above three items can be taken as the image stitching requirements to balance between the processing cost and the quality of the panoramic image.

In an example, for the panoramic image stitching system 200 of the eight 8MP cameras shown in Figure 2, the maximum allowable transmission bandwidth of the interface of the processor may be, for example, 7.63GB/s, and the maximum allowable data buffer capacity of the processor may be, for example, 5600B.

According to one or more embodiments, in step 330, the first threshold of the traffic peak can be determined based on at least one of the maximum allowable transmission bandwidth of the interface of the processor and the maximum allowable data buffer capacity of the processor.

According to one or more embodiments, in step 420, one or more discrete first time offsets are determined based on the image stitching requirements and the pixel row readout time.

According to one or more embodiments, in step 420, the optional range of the time offset can also be determined based on the image stitching requirements and the pixel row readout time, and the at least one first time offset is determined by determining a plurality of optional time offsets from the optional range by using a target time unit as the interval, and performing traffic peak tests.

For example, based on the image stitching requirements and the pixel row readout time, the optional range is determined to be [0, 50 $\mu$s], and if 1 $\mu$s is used as the target time unit, the optional time offsets include 0, 1 $\mu$s, 2 $\mu$s, 3 $\mu$s, ... 50 $\mu$s, and after performing the traffic peak test, the 2 μs, 4 μs, 13 μs, and 25 μs are determined as the at least one first time offset.

According to one or more embodiments, in step 330, the determined first traffic peak corresponding to each first time offset is the same or different.

In an example, the smallest first time offset among the plurality of first time offsets corresponding to the same first traffic peak can be selected as the optimal solution to improve the exposure efficiency. For example, if 2 μs, 4 μs, and 13 μs correspond to the same first traffic peak, 2 μs can be selected as the optimal first time offset and set as the exposure delay time of the cameras.

According to some embodiments, the panoramic image stitching includes panoramic image stitching performed for a moving object, and the maximum value of the exposure delay time that is allowed to be set, such that the feature similarity between every two images to be stitched among the plurality of images is greater than the third threshold, is determined based on the following conditions: the moving speed of the moving object; the moving distance of the moving object corresponding to a single pixel in the image captured by each camera; and the pixel offset that is allowed to exist in the image captured by each camera for achieving the panoramic image stitching.

In one or more embodiments, to simplify the processing procedure, the maximum allowable value of the exposure delay time may be determined based on any one or any two of the above three items to balance between the processing cost and the quality of the panoramic image.

In scenarios such as autonomous driving, it is typically necessary to capture and stitch panoramic images for moving objects (e.g., a vehicle moving relative to a roadside device, or a pedestrian and an obstacle moving relative to a moving vehicle). At this point, it is necessary to set the maximum allowable time offset based on the specific status parameters of the moving object to ensure that a plurality of clear images with sufficient continuity and overlap can be captured to be used as the images to be stitched.

In an example, a roadside device equipped with eight cameras needs to capture a panoramic image for a road scenario including a moving vehicle. Given that the speed of the moving vehicle is 120 km/h (33.33 m/s), in the image captured by each camera, the actual distance in the roadside scenario corresponding to a single pixel is 3.57 mm/pixel, and the pixel offset that is allowed to exist in the captured image is 1.5 pixels.

Based on this, the maximum allowable value of each first time offset for achieving the panoramic image stitching can be determined as follows:

the maximum allowable actual offset distance = 1.5pixel × 3.57mm/pixel = 5.355mm the maximum allowable total time

$$\text{offset} = \frac{5.355\text{mm}}{33.33\text{m/s}} = 161 \ \mu\text{s}$$

the maximum allowable first time offset between two

$$\text{cameras} = \frac{161\mu s}{7} = 23 \ \mu s$$

adjacent

Thus, 23 μs can be used as the maximum exposure delay time constraint to ensure that the first time offset obtained by optimization can meet the requirement that a clear and complete panoramic image for the road scenario including a moving vehicle can be stitched from the captured images.

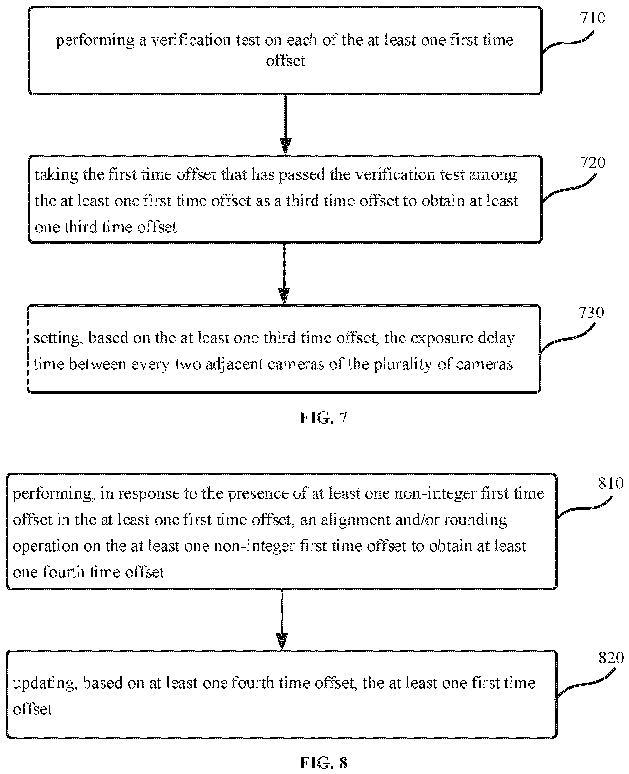

Figure 7 shows a partial flowchart of another camera image data processing method according to an embodiment of the present disclosure.

According to some embodiments, as shown in Figure 7, in addition to steps 310 to 340, the method 300 further includes:

step 710: performing a verification test on each of the at least one first time offset;

step 720: taking the first time offset that has passed the verification test among the at least one first time offset as a third time offset to obtain at least one third time offset; and

step 730: setting, based on the at least one third time offset, the exposure delay time between every two adjacent cameras of the plurality of cameras.

By performing the verification test on the at least one first time offset obtained by optimization, the effectiveness of the finally obtained at least one third time offset can be further improved.

According to some embodiments, the verification test includes at least one of the following: verifying whether the first traffic peak corresponding to each first time offset is less than the maximum allowable transmission bandwidth of the interface of the processor; verifying whether the first traffic peak corresponding to each first time offset is less the maximum allowable data buffer capacity of the processor; and verifying, when setting the exposure delay between every two adjacent cameras of the plurality of cameras based on each first time offset, whether the image stitching error of the plurality of captured images is less than a second threshold, where the image stitching error indicates the degree of feature difference between the regions for image stitching between every two images of the plurality of images.

Taking the above three items as the image stitching requirements, it is possible to effectively verify whether the determined first time offset affects the quality of the panoramic image stitching to further improve the quality of the finally obtained panoramic image.

Figure 8 illustrates a partial flowchart of another image data processing method according to an embodiment of the present disclosure.

According to some embodiments, as shown in Figure 8, in addition to steps 310 to 340, the method 300 further includes:

> step 810: performing, in response to the presence of at least one non-integer first time offset in the at least one first time offset, an alignment and/or rounding operation on the at least one non-integer first time offset to obtain at least one fourth time offset; and
> step 820: updating, based on at least one fourth time offset, the at least one first time offset.

The first time offset obtained through optimization may be a floating-point number, therefore, by performing a numerical simplification operation on it, the data processing difficulty of the subsequent setting of the exposure time delay based on the first time offset can be reduced to improve the practicality of the obtained first time offset.

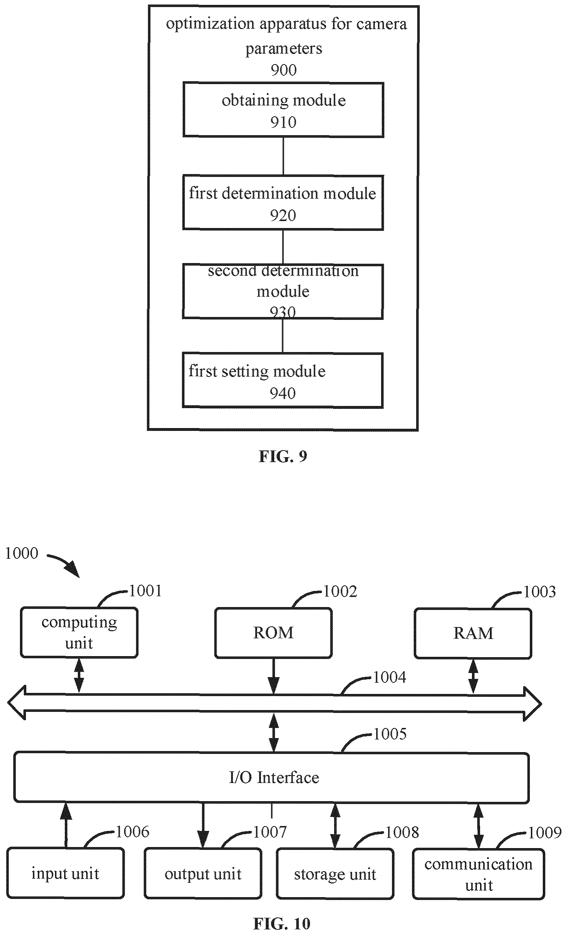

Figure 9 illustrates a structural block diagram of a camera image data processing apparatus according to an embodiment of the present disclosure.

According to another aspect of the present disclosure, a camera image data processing apparatus is provided. As shown in Figure 9, the data quantization apparatus 900 of the optimizer includes: an obtaining module 910 configured to obtain initial camera parameters, where the initial camera parameters are used for each of a plurality of cameras, where the plurality of cameras is used to capture a plurality of images and transmit the plurality of images in parallel to a processor for panoramic image stitching; a first determination module 920 configured to determine, based on the initial camera parameters, a target condition, where the target condition indicates a range of exposure delay times that are allowed to be set between every two adjacent cameras of the plurality of cameras; a second determination module 930 configured to determine, based on the target condition, at least one first time offset, where each of the at least one first time offset indicates an exposure delay time between every two adjacent cameras of the plurality of cameras when the the plurality of cameras is triggered in sequence, and when setting the exposure delay time between every two adjacent cameras of the plurality of cameras based on each first time offset, the first traffic peak generated during the transmission of the plurality of images in parallel to the processor by the plurality of cameras is less than a first threshold; and a setting module 940 configured to set, based on the at least one first time offset, the exposure delay time between every two adjacent cameras of the plurality of cameras.

According to another aspect of the present disclosure, an electronic device is provided, including: at least one processor; and a memory communicatively connected to the at least one processor; where the memory stores instructions executable by the at least one processor, and the instructions are executed by the at least one processor to enable the at least one processor to perform the method according to embodiments of the present disclosure.

According to another aspect of the present disclosure, a non-transitory computer-readable storage medium storing computer instructions is provided, where the computer instructions are used to enable the computer to perform the method according to embodiments of the present disclosure.

According to another aspect of the present disclosure, a computer program product is provided, including a computer program, where the computer program, when executed by a processor, implements the method according to embodiments of the present disclosure.

As shown in FIG. 10, the electronic device 1000 includes a computing unit 1001, which may perform various appropriate actions and processing according to a computer program stored in a read-only memory (ROM) 1002 or a computer program loaded into a random access memory (RAM) 1003 from a storage unit 1008. In the RAM 1003, various programs and data required by the operation of the electronic device 1000 may also be stored. The computing unit 1001, the ROM 1002, and the RAM 1003 are connected to each other through a bus 1004. Input/output (I/O) interface 1005 is also connected to the bus 1004.

A plurality of components in the electronic device 1000 are connected to a I/O interface 1005, including: an input unit 1006, an output unit 1007, a storage unit 1008, and a communication unit 1009. The input unit 1006 may be any type of device capable of inputting information to the electronic device 1000, the input unit 1006 may receive input digital or character information and generate a key signal input related to user setting and/or function control of the electronic device, and may include, but is not limited to, a mouse, a keyboard, a touch screen, a track pad, a trackball, a joystick, a microphone, and/or a remote control. The output unit 1007 may be any type of device capable of presenting information, and may include, but are not limited to, a display, a speaker, a video/audio output terminal, a vibrator, and/or a printer. The storage unit 1008 may include, but is not limited to, a magnetic disk and an optical disk. The communication unit 1009 allows the electronic device 1000 to exchange information/data with other devices over a computer network, such as the Internet, and/or various telecommunication networks, and may include, but is not limited to, a modem, a network card, an infrared communication device, a wireless communication transceiver and/or a chipset, such as a Bluetooth TM device, a 802.11 device, a WiFi device, a WiMAX device, a cellular communication device, and/or the like.

The computing unit 1001 may be a variety of general and/or special purpose processing components with processing and computing capabilities. Some examples of the computing unit 1001 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, etc. The computing unit 1001 performs the various methods and processes described above, such as the camera image data processing method. For example, in some embodiments, the camera image data processing method may be implemented as a computer software program tangibly contained in a machine-readable medium, such as the storage unit 1008. **In** some embodiments, part or all of the computer program may be loaded and/or installed onto the electronic device 1000 via the ROM 1002 and/or the communication unit 1009. When the computer program is loaded to the RAM 1003 and executed by the computing unit 1001, one or more steps of the camera image data processing method described above may be performed. Alternatively, in other embodiments, the computing unit 1001 may be configured to perform the camera image data processing method by any other suitable means (e.g., with the aid of firmware).

Various embodiments of the systems and techniques described above herein may be implemented in a digital electronic circuit system, an integrated circuit system, a field programmable gate array (FPGA), an application specific integrated circuit (ASIC), a dedicated standard product (ASSP), a system of system on a chip system (SoC), a complex programmable logic device (CPLD), computer hardware, firmware, software, and/or combinations thereof. These various embodiments may include: implementation in one or more computer programs that may be executed and/or interpreted on a programmable system including at least one programmable processor, where the programmable processor may be a dedicated or universal programmable processor that may receive data and instructions from a storage system, at least one input device, and at least one output device, and transmit data and instructions to the storage system, the at least one input device, and the at least one output device.

The program code for implementing the method of the present disclosure may be written in any combination of one or more programming languages. These program code may be provided to a processor or controller of a general-purpose computer, a special purpose computer, or other programmable data processing device such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium, which may contain or store a program for use by or in connection with an instruction execution system, device, or device. The machine-readable medium may be a machine-readable signal medium or a machine-readable storage medium. The machine-readable medium may include, but is not limited to, electronic, magnetic, optical, electromagnetic, infrared, or semiconductor systems, apparatus, or devices, or any suitable combination of the foregoing. More specific examples of a machine-readable storage media may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

To provide interaction with a user, the systems and techniques described herein may be implemented on a computer having: a display device (e.g., a CRT (cathode ray tube) or an LCD (liquid crystal display) monitor) for displaying information to a user; and a keyboard and pointing device (e.g., a mouse or trackball) by which a user may provide input to the computer. Other types of devices may also be used to provide interaction with a user; for example, the feedback provided to the user may be any form of perception feedback (e.g., visual feedback, auditory feedback, or tactile feedback); and the input from the user may be received in any form, including acoustic input, voice input, or haptic input.

The systems and techniques described herein may be implemented in a computing system including a back-end component(e.g., as a data server), or a computing system including a middleware component (e.g., an application server), or a computing system including a front-end component (e.g., a user computer with a graphic user interface or a web browser, the user may interact with implementations of the systems and techniques described herein through the graphic user interface or the web browser), or in a computing system including any combination of such back-end components, middleware components, or front-end components. The components of the system may be interconnected by digital data communication (e.g., a communications network) in any form or medium. Examples of communication networks include a local area network (LAN), a wide area network (WAN), the Internet, and a blockchain network.

The computer system may include a client and a server. Clients and servers are generally remote from each other and typically interact through a communication network. The relationship between clients and servers is generated by computer programs running on respective computers and having a client-server relationship to each other. The server may be a cloud server, or may be a server of a distributed system, or a server incorporating a blockchain.

It should be understood that the various forms of processes shown above may be used, and the steps may be reordered, added, or deleted. For example, the steps described in the present disclosure may be performed in parallel or sequentially or in a different order, as long as the results expected by the technical solutions disclosed in the present disclosure can be achieved, and no limitation is made herein.

Although embodiments or examples of the present disclosure have been described with reference to the accompanying drawings, it should be understood that the foregoing methods, systems, and devices are merely embodiments or examples, and the scope of the present disclosure is not limited by these embodiments or examples, but is only defined by the authorized claims and their equivalents. Various elements in the embodiments or examples may be omitted or may be replaced by equivalent elements thereof. Further, the steps may be performed by a different order than described in this disclosure. Further, various elements in the embodiments or examples may be combined in various ways. Importantly, with the evolution of the technology, many elements described herein may be replaced by equivalent elements appearing after the present disclosure.

## Claims

1. A camera image data processing method, comprising:

   obtaining (310) initial camera parameters, wherein the initial camera parameters are used for each of a plurality of cameras, wherein the plurality of cameras is used to capture a plurality of images and transmit the plurality of images in parallel to a processor for panoramic image stitching;
   determining (320), based on the initial camera parameters, a target condition, wherein the target condition indicates a range of exposure delay times that are allowed to be set between every two adjacent cameras of the plurality of cameras;
   determining (330), based on the target condition, at least one first time offset, wherein each of the at least one first time offset indicates an exposure delay time between every two adjacent cameras of the plurality of cameras, and when setting the exposure delay time between every two adjacent cameras of the plurality of cameras based on each first time offset, the first traffic peak generated during the transmission of the plurality of images in parallel to the processor by the plurality of cameras is less than a first threshold; and
   setting (340), based on the at least one first time offset, the exposure delay time between every two adjacent cameras of the plurality of cameras.

2. The method according to claim 1, wherein the determining, based on the initial camera parameters, the target condition comprises:

   determining, based on the initial camera parameters, a pixel row readout time, wherein the pixel row readout time indicates the time for reading out the data of the corresponding exposed pixel row; and
   determining, based on image stitching requirements and the pixel row readout time, the target condition, wherein the image stitching requirements indicate the range of exposure delay times that are allowed to be set such that the feature similarity between every two images to be stitched among the plurality of images is greater than a third threshold, and optionally, wherein the image stitching requirements comprise at least one of the following:

   the maximum allowable transmission bandwidth of the interface of the processor;
   the maximum allowable data buffer capacity of the processor; and
   the maximum value of the exposure delay time that is allowed to be set such that the feature similarity between every two images to be stitched among the plurality of images is greater than the third threshold.

3. The method according to claim 1, wherein the determining, based on the target condition, the at least one first time offset comprises:

   determining, based on the target condition, a plurality of second time offsets, wherein each of the plurality of second time offsets indicates the exposure delay time between every two adjacent cameras of the plurality of cameras;
   performing, based on each second time offset respectively, a trigger test on the plurality of cameras, and obtaining a plurality of second traffic peaks corresponding to the plurality of second time offsets, wherein each of the plurality of second traffic peaks indicates the traffic peak generated during the transmission of the plurality of images in parallel to the processor by the plurality of cameras based on the corresponding second time offset; and
   selecting at least one second traffic peak that is less than the first threshold from the plurality of second traffic peaks, and taking the at least one second time offset corresponding to the at least one second traffic peak as the at least one first time offset.

4. The method according to claim 2, wherein the initial camera parameters at least comprise the camera frame rate, the pixel clock, and the number of pixel columns and pixel rows of the captured image of each camera, and wherein the determining, based on the initial camera parameters, the pixel row readout time comprises:
determining the pixel row readout time based on the camera frame rate, the pixel clock, the number of pixel columns and pixel rows.

5. The method according to claim 2, wherein the panoramic image stitching comprises panoramic image stitching performed for a moving object, and wherein the maximum value of the exposure delay time that is allowed to be set, such that the feature similarity between every two images to be stitched among the plurality of images is greater than the third threshold, is determined based on the following conditions:

> the moving speed of the moving object;
> the moving distance of the moving object corresponding to a single pixel in the image captured by each camera; and
> the pixel offset that is allowed to exist in the image captured by each camera for achieving the panoramic image stitching.

6. The method according to any one of claims 1-5, further comprising:

> performing a verification test on each of the at least one first time offset, wherein the verification test is used to verify whether each first time offset meets the requirements for implementing the panoramic image stitching;
> taking the first time offset that has passed the verification test among the at least one first time offset as a third time offset, to obtain at least one third time offset; and
> setting, based on the at least one third time offset, the exposure delay time between every two adjacent cameras of the plurality of cameras, and optionally,
> wherein the verification test comprises at least one of the following:
>
>> verifying whether the first traffic peak corresponding to each first time offset is less than the maximum allowable transmission bandwidth of the interface of the processor;
>> verifying whether the first traffic peak corresponding to each first time offset is less than the maximum allowable data buffer capacity of the processor; and
>> verifying, when setting the exposure delay time between every two adjacent cameras of the plurality of cameras based on each first time offset, whether the image stitching error of the plurality of captured images is less than a second threshold, wherein the image stitching error indicates the degree of feature difference between the regions for image stitching between every two images of the plurality of images.

7. The method according to any one of claims 1-6, further comprising:

> performing, in response to the presence of at least one non-integer first time offset in the at least one first time offset, an alignment and/or rounding operation on the at least one non-integer first time offset to obtain at least one fourth time offset; and
> updating, based on at least one fourth time offset, the at least one first time offset.

8. An image data processing apparatus, comprising:

> an obtaining module (910) configured to obtain initial camera parameters, wherein the initial camera parameters are used for each of a plurality of cameras, and wherein the plurality of cameras is used to capture a plurality of images and transmit the plurality of images in parallel to a processor for panoramic image stitching;
> a first determination module (920) configured to determine, based on the initial camera parameters, a target condition, wherein the target condition indicates a range of exposure delay times that are allowed to be set between every two adjacent cameras of the plurality of cameras;
> a second determination module (930) configured to determine, based on the target condition, at least one first time offset, wherein each of the at least one first time offset indicates an exposure delay time between every two adjacent cameras of the plurality of cameras, and when setting the exposure delay time between every two adjacent cameras of the plurality of cameras based on each first time offset, the first traffic peak generated during the transmission of the plurality of images in parallel to the processor by the plurality of cameras is less than a first threshold; and
> a setting module (940) configured to set, based on the at least one first time offset, the exposure delay time between every two adjacent cameras of the plurality of cameras.

9. The apparatus according to claim 8, wherein the first determination module comprises:

> a first determination sub-module configured to determine, based on the initial camera parameters, a pixel row readout time, wherein the pixel row readout time indicates the time for reading out the data of the corresponding exposed pixel row; and

a second determination sub-module configured to determine, based on image stitching requirements and the pixel row readout time, the target condition, wherein the image stitching requirements indicate the range of exposure delay times that are allowed to be set such that the feature similarity between every two images to be stitched among the plurality of images is greater than a third threshold, and optionally, wherein the initial camera parameters at least comprise the camera frame rate, the pixel clock, and the number of pixel columns and pixel rows of the captured image of each camera, and wherein the first determination module is configured to:

> determine the pixel row readout time based on the camera frame rate, the pixel clock, the number of pixel columns and pixel rows, and optionally,
>
> wherein the image stitching requirements comprise at least one of the following:
>
>> the maximum allowable transmission bandwidth of the interface of the processor;
>> the maximum allowable data buffer capacity of the processor; and
>> the maximum value of the exposure delay time that is allowed to be set such that the feature similarity between every two images to be stitched among the plurality of images is greater than the third threshold.

10. The apparatus according to claim 8, wherein the second determination module comprises:

> a determination sub-module configured to determine, based on the target condition, a plurality of second time offsets, wherein each of the plurality of second time offsets indicates the exposure delay time between every two adjacent cameras of the plurality of cameras;
> a test sub-module configured to perform, based on each second time offset respectively, a trigger test on the plurality of cameras, and obtaining a plurality of second traffic peaks corresponding to the plurality of second time offsets, wherein each of the plurality of second traffic peaks indicates the traffic peak generated during the transmission of the plurality of images in parallel to the processor by the plurality of cameras based on the corresponding second time offset; and

> a selection sub-module configured to select at least one second traffic peak that is less than the first threshold from the plurality of second traffic peaks, and taking the at least one second time offset corresponding to the at least one second traffic peak as the at least one first time offset.

11. The apparatus according to claim 9, wherein the panoramic image stitching comprises panoramic image stitching performed for a moving object, and wherein the maximum value of the exposure delay time that is allowed to be set, such that the feature similarity between every two images to be stitched among the plurality of images is greater than the third threshold, is determined based on the following conditions:

> the moving speed of the moving object; the moving distance of the moving object corresponding to a single pixel in the image captured by each camera; and
> the pixel offset that is allowed to exist in the image captured by each camera for achieving the panoramic image stitching.

12. The apparatus according to any one of claims 8-11, further comprising:

> a verification module configured to perform a verification test on each of the at least one first time offset, wherein the verification test is used to verify whether each first time offset meets the requirements for implementing the panoramic image stitching;
> a third determination module configured to take the first time offset that has passed the verification test among the at least one first time offset as a third time offset to obtain at least one third time offset; and
> a second setting module configured to set, based on the at least one third time offset, the exposure delay time between every two adjacent cameras of the plurality of cameras, and optionally,
> wherein the verification test comprises at least one of the following:
>
>> verifying whether the first traffic peak corresponding to each first time offset is less than the maximum allowable transmission bandwidth of the interface of the processor;
>> verifying whether the first traffic peak corresponding to each first time offset is less than the maximum allowable data buffer capacity of the processor; and
>> verifying, when setting the exposure delay between every two adjacent cameras of the plurality of cameras based on each first time offset, whether the image stitching error of the plurality of images captured is less than a second threshold, wherein the image stitching error indicates the degree of feature difference between the regions for image stitching between every two images of the plurality of images.

13. The apparatus according to claims 9-12, further comprising:

a data value module configure to perform, in response to the presence of at least one non-integer first time offset in the at least one first time offset, an alignment and/or rounding operation on the at least one non-integer first time offset to obtain at least one fourth time offset; and
an update module configured to update, based on at least one fourth time offset, the at least one first time offset.

14. A computer program product comprising program code portions for performing the method of any one of claims 1 to 7 when the computer program product is executed on one or more computing devices.

15. A computer-readable storage medium storing programs, wherein the programs comprise instructions, and the instructions which, when executed by a processor of a computing device, cause the computing device to implement the method according to any one of claims 1-7.

100

101

102

103

104

105

106

network
110

server
120

database
130

database
130

database
130

**FIG.1**

| plurality of cameras 210 | → | deserializer 220 | → | image processing chip 230 | → | FPGA processing unit 240 | | | | | | | | → | processor 250 |

FPGA processing unit 240

| MIPI IP interface 241 | → | FIFO data buffer 242 | → | DMA module 243 | → | PCIe IP interface 244 |

**FIG. 2**

300

```
┌─────────────────────────────────────────────────────┐
│                                                      │   310
│          obtaining initial camera parameters         │
│                                                      │
└─────────────────────────────────────────────────────┘
                           │
                           ▼
┌─────────────────────────────────────────────────────┐
│                                                      │   320
│  determining, based on the initial camera parameters, a target condition  │
│                                                      │
└─────────────────────────────────────────────────────┘
                           │
                           ▼
┌─────────────────────────────────────────────────────┐
│                                                      │   330
│  determining, based on the target condition, at least one first time offset  │
│                                                      │
└─────────────────────────────────────────────────────┘
                           │
                           ▼
┌─────────────────────────────────────────────────────┐
│  setting, based on the at least one first time offset, the exposure delay  │   340
│  time between every two adjacent cameras of the plurality of cameras  │
└─────────────────────────────────────────────────────┘
```

**FIG. 3**

```
┌─────────────────────────────────────────────────────┐
│  determining a pixel row readout time based on the initial camera  │   410
│                      parameters                      │
└─────────────────────────────────────────────────────┘
                           │
                           ▼
┌─────────────────────────────────────────────────────┐
│  determining, based on image stitching requirements and the pixel row  │   420
│           readout time, the target condition          │
└─────────────────────────────────────────────────────┘
```

**FIG. 4**

**FIG. 5a**

|  | First Moment | Second Moment |
|---|---|---|
| Camera 1 | 7680B | GAP |
| Camera 2 | 7680B | GAP |
| Camera 3 | 7680B | GAP |
| Camera 4 | 7680B | GAP |
| Camera 5 | 7680B | GAP |
| Camera 6 | 7680B | GAP |
| Camera 7 | 7680B | GAP |
| Camera 8 | 7680B | GAP |

**FIG. 5b**

|  | First Moment | Second Moment | Third Moment |
|---|---|---|---|
| Camera 1 | 7680B |  | GAP |
| Camera 2 | GAP | 7680B |  |
| Camera 3 | 3840B | GAP | 3840B |
| Camera 4 | 7680B |  | GAP |
| Camera 5 | GAP | 7680B |  |
| Camera 6 | 3840B | GAP | 3840B |
| Camera 7 | 7680B |  | GAP |
| Camera 8 | GAP | 7680B |  |

**FIG. 5c**

determining, based on the target condition, a plurality of second time offsets — 631

performing, based on each second time offset respectively, a trigger test on the plurality of cameras, and obtaining a plurality of second traffic peaks corresponding to the plurality of second time offsets — 632

selecting at least one second traffic peak that is less than the first threshold from the plurality of second traffic peaks, and taking the at least one second time offset corresponding to the at least one second traffic peak as the at least one first time offset — 633

**FIG. 6**

performing a verification test on each of the at least one first time offset — 710

taking the first time offset that has passed the verification test among the at least one first time offset as a third time offset to obtain at least one third time offset — 720

setting, based on the at least one third time offset, the exposure delay time between every two adjacent cameras of the plurality of cameras — 730

**FIG. 7**

performing, in response to the presence of at least one non-integer first time offset in the at least one first time offset, an alignment and/or rounding operation on the at least one non-integer first time offset to obtain at least one fourth time offset — 810

updating, based on at least one fourth time offset, the at least one first time offset — 820

**FIG. 8**

optimization apparatus for camera
parameters
900

obtaining module
910

first determination module
920

second determination
module
930

first setting module
940

**FIG. 9**

1000

1001
computing
unit

1002
ROM

1003
RAM

1004

1005
I/O Interface

1006
input unit

1007
output unit

1008
storage unit

1009
communication
unit

**FIG. 10**